# EUROPÄISCHE PATENTSCHRIFT

(11) **EP 3 322 623 B1**
(45) Veröffentlichungstag und Bekanntmachung des Hinweises auf die Patenterteilung: **17.04.2019**
(21) Anmeldenummer: 16739139.0
(22) Anmeldetag: 15.07.2016
(51) Int. Cl.: B60T 17/00, F16L 55/033

(54) **SCHALLDÄMPFER**
SOUND ATTENUATOR
SILENCIEUX

(30) Priorität: 16.07.2015 DE 102015111512
(43) Veröffentlichungstag der Anmeldung: 23.05.2018
(73) Patentinhaber: KNORR-BREMSE Systeme für Nutzfahrzeuge GmbH, 80809 München (DE)
(72) Erfinder: WEIGEL, Conni, 86156 Augsburg (DE)
(86) Internationale Anmeldenummer: PCT/EP2016/066858
(87) Internationale Veröffentlichungsnummer: WO 2017/009445

(56) Entgegenhaltungen:
- DE-A1- 2 904 529
- DE-A1- 3 503 270
- DE-U1-202007 006 627
- US-A- 5 145 026

## Beschreibung

Die vorliegende Erfindung betrifft einen Schalldämpfer, insbesondere einen Schalldämpfer zum Ableiten von Druckluft aus einer Druckluftaufbereitungsanlage. Die Erfindung betrifft außerdem eine Druckluftaufbereitungsanlage mit einem solchen Schalldämpfer, insbesondere eine Druckluftaufbereitungsanlage für Kraftfahrzeuge.

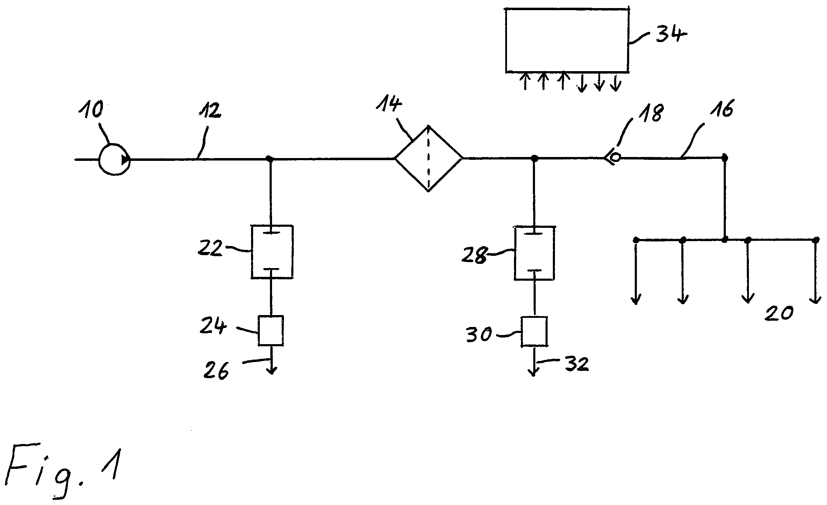

Eine Druckluftaufbereitungsanlage, wie sie beispielsweise für pneumatische Bremsanlagen von Kraftfahrzeugen, insbesondere Nutzfahrzeugen, verwendet werden kann, ist beispielhaft in Fig. 1 veranschaulicht. Solche Druckluftaufbereitungsanlagen weisen üblicherweise einen Kompressor 10 auf, der über eine Eingangsleitung 12 mit einer Lufttrocknereinrichtung 14 verbunden ist, welche zum Beispiel eine Lufttrocknerpatrone enthält. Die Lufttrocknereinrichtung 14 ist ausgangsseitig mit einer Hauptleitung 16 verbunden, in der ein Rückschlagventil 18 angeordnet ist. Mit dieser Hauptleitung 16 sind mehrere Druckluftanschlüsse 20 verbunden, an die verschiedene Druckluftbehälter oder Druckluftverbraucher (z.B. Betriebsbremse, Feststellbremse, Luftfederung, etc.) angeschlossen werden können.

Zum Regeln der Druckverhältnisse in der Druckluftaufbereitungsanlage, zum Durchführen eines Regenerationsprozesses für die Lufttrocknereinrichtung und zum Durchführen eines Abschaltvorganges der Anlage sind in der Regel stromauf der Lufttrocknereinrichtung 14 ein Ablassventil 22 und stromab der Lufttrocknereinrichtung 14 ein Regerationsventil 28 vorgesehen. In der Ausführungsform von Fig. 1 ist zwischen dem Ablassventil 22 und dem Auslass 26 in die Atmosphäre ein Schalldämpfer 24 vorgesehen und ist zwischen dem Regenerationsventil 28 und dem Auslass 32 in die Atmosphäre ein Schalldämpfer 30 vorgesehen. Die beiden Schalldämpfer 24, 30 dienen dem Ableiten und Entspannen der Druckluft aus der Druckluftaufbereitungsanlage unter gleichzeitiger Dämpfung der Ausströmgeräusche der Druckluft. Weitere Druckluftventile und Schalldämpfer können vorgesehen sein.

Solche Druckluftaufbereitungsanlagen sind beispielsweise aus der DE 199 11 741 B4 und der DE 10 2006 034 762 B3 bekannt.

Die Schalldämpfer für solche Druckluftaufbereitungsanlagen weisen üblicherweise ein topfartiges Gehäuse auf, in dem ein Schallreduktionsmaterial in Form eines ein- oder mehrlagig gewickelten Gestricks angeordnet ist, wie dies beispielsweise aus der EP 2 152 556 B1 bekannt ist.

Im Hinblick auf immer strengere Anforderungen an die Geräuschemissionen und immer leiser werdende Kraftfahrzeuge besteht Bedarf an Pneumatik-Schalldämpfern, deren Schallreduktionswirkung weiter verbessert ist.

Der Erfindung liegt die Aufgabe zugrunde, einen Schalldämpfer mit verbesserten Schalldämpfungseigenschaften vorzusehen. Der Schalldämpfer soll bevorzugt für den Einsatz in Druckluftaufbereitungsanlagen von Kraftfahrzeugen geeignet sein.

Diese Aufgabe wird gelöst durch einen Schalldämpfer mit den Merkmalen des unabhängigen Anspruchs 1. Besonders vorteilhafte Ausgestaltungen der Erfindung sind Gegenstand der abhängigen Ansprüche.

Der Schalldämpfer der Erfindung weist ein Gehäuse mit wenigstens einer Einlassöffnung und wenigstens einer Auslassöffnung sowie ein in dem Gehäuse zwischen der wenigstens einen Einlassöffnung und der wenigstens einen Auslassöffnung angeordnetes Schallreduktionsmaterial zum Reduzieren von Strömungsgeräuschen einer in dem Gehäuse expandierenden und durch das Schallreduktionsmaterial hindurch strömenden Druckluft auf. Bei dem erfindungsgemäßen Schalldämpfer weist das Schallreduktionsmaterial in einem an die wenigstens eine Einlassöffnung angrenzenden Zentralbereich eine höhere Packungsdichte auf als in einem an die wenigstens eine Auslassöffnung angrenzenden Außenbereich.

Die Erfindung geht dabei von der Überlegung aus, dass die Packungsdichte des Schallreduktionsmaterials ein wesentlicher Faktor für die Schallabsorption im Schalldämpfer ist. Allerdings erhöht eine höhere Packungsdichte des Schallreduktionsmaterials den Strömungswiderstand und verlängert damit die Entlüftungszeit. Die Lautstärke der Strömungsgeräusche und die Entlüftungszeit der Druckluft verhalten sich reziprok zueinander.

Gemäß der Erfindung wird deshalb vorgeschlagen, die Packungsdichte des Schallreduktionsmaterials nur in einem Zentralbereich angrenzend an die wenigstens eine Einlassöffnung des Gehäuses zu erhöhen. Auf diese Weise kann erreicht werden, dass sich die Druckluft in einem Bereich entspannt, in dem eine erhöhte Packungsdichte des Schallreduktionsmaterials vorhanden ist, sodass die Schallabsorption verbessert werden kann. Andererseits wird die Packungsdichte des Schallreduktionsmaterials im Außenbereich angrenzend an die wenigstens eine Auslassöffnung des Gehäuses nicht erhöht, sodass der Strömungswiderstand für die (teil-)entspannte Druckluft im Außenbereich nicht vergrößert wird. Bei Verwendung des erfindungsgemäßen Schalldämpfers werden deshalb die Entlüftungszeiten der Druckluft nur unwesentlich verlängert, wohingegen die Geräuschemissionen deutlich reduziert werden können.

Bei dem Schallreduktionsmaterial handelt es sich vorzugsweise um ein Schalldämpfungsmaterial, bevorzugt um ein Absorptionsschalldämpfungsmaterial. Zu den geeigneten Schallreduktionsmaterialien zählen insbesondere Gestricke, Gewirke, Schaumstoffe und dergleichen.

Die Packungsdichte des Schallreduktionsmaterials kann in diesem Zusammenhang insbesondere durch den Herstellungsprozess des Schallreduktionsmaterials, eine Wicklung oder Schichtung des Schallreduktionsmaterials, den für das Schallreduktionsmaterial zur Verfügung stehenden Bauraum im Gehäuse und/oder die Gehäuseform beeinflusst werden.

Die unterschiedlichen Packungsdichten zwischen Zentralbereich und Außenbereich gehen vorzugsweise allmählich oder fließend ineinander über. Die Packungsdichte ist im Zentralbereich gegenüber jener im Außenbereich vorzugsweise um einen Faktor von wenigstens 1,2, bevorzugt von wenigstens 1,5 oder von wenigstens 2,0 erhöht. Diese Angaben beziehen sich auf eine maximale oder durchschnittliche Packungsdichte im Zentralbereich und auf eine minimale oder durchschnittliche Packungsdichte im Außenbereich. Die gewünschte Erhöhung der Packungsdichte im Zentralbereich lässt sich bevorzugt allgemein durch ein Übermaß des Schallreduktionsmaterials (in seinem entspannten Ausgangszustand) im Vergleich zur Innenabmessung des Gehäuses bewirken.

Die Begriffe Zentralbereich und Außenbereich sollen in diesem Zusammenhang nur ihre jeweilige Lage angrenzend an die wenigstens eine Einlassöffnung bzw. angrenzend an die wenigstens eine Auslassöffnung bezeichnen. Sie sind nicht auf eine spezielle Positionierung relativ zueinander oder relativ zum Gehäuse eingeschränkt. So muss insbesondere der Zentralbereich nicht notwendigerweise mittig innerhalb des Außenbereichs bzw. mittig im Gehäuse angeordnet sein.

In einer Ausgestaltung der Erfindung kann das Schallreduktionsmaterial im Zentralbereich in Richtung zur Einlassöffnung hin gegen das Gehäuse vorgespannt sein. Durch eine solche Vorspannung kann erreicht werden, dass im Bereich der Einlassöffnung kein Spalt zwischen dem Gehäuse und dem Schallreduktionsmaterial existiert. Im Ergebnis kann sichergestellt werden, dass die durch die wenigstens eine Einlassöffnung einströmende Druckluft nicht an dem Schallreduktionsmaterial mit der höheren Packungsdichte vorbei strömen kann, sondern sich im Zentralbereich mit der erhöhten Packungsdichte entspannt, wo das Schallreduktionsmaterial die verstärkten Schallabsorptionseigenschaften besitzt. Die Vorspannung zur Einlassöffnung hin kann vorzugsweise durch ein Verpressen des Schallreduktionsmaterials zur Einlassöffnung hin und/oder von der Einlassöffnung her bewirkt werden.

In einer Ausgestaltung der Erfindung weist der Schalldämpfer eine axiale Richtung, die durch eine Einströmrichtung der Druckluft durch die wenigstens eine Einlassöffnung definiert ist, und eine radiale Richtung senkrecht zu dieser axialen Richtung auf. Das Schallreduktionsmaterial ist im Zentralbereich des Gehäuses vorzugsweise in der axialen Richtung und/oder der radialen Richtung des Schalldämpfers verdichtet oder verpresst.

In einer Ausgestaltung der Erfindung weist das Gehäuse gegenüber der wenigstens einen Einlassöffnung keine Auslassöffnung(en) auf. Durch diese Maßnahme kann erreicht werden, dass die durch die wenigstens eine Einlassöffnung einströmende Druckluft nach dem Zentralbereich auch noch den Außenbereich durchströmt und durch die so verlängerte Strömungsstrecke durch das Gehäuse die Geräuschemissionen besser reduziert werden können.

In einer weiteren Ausgestaltung der Erfindung ist die Packungsdichte des Schallreduktionsmaterials im Zentralbereich variabel einstellbar. Auf diese Weise kann der Schalldämpfer an unterschiedliche Rahmenbedingungen (z.B. Druckverhältnisse, geforderte Entlüftungszeiten, etc.) angepasst werden.

In einer noch weiteren Ausgestaltung der Erfindung weist das Gehäuse einen in das Gehäuse hinein ragenden Vorsprung auf, der derart positioniert ist, dass eine Höhe des Zentralbereichs kleiner als eine Höhe des Gehäuses ist. Bei dieser Gehäusekonfiguration muss das Schallreduktionsmaterial selbst nicht modifiziert werden, die Veränderung der Packungsdichte wird stattdessen über eine Modifikation des Bauraums für das Schallreduktionsmaterial im Gehäuse erreicht. Diese Ausgestaltung kann aber selbstverständlich auch mit einer Veränderung des Schallreduktionsmaterials kombiniert werden. Durch den in das Gehäuse hinein ragenden Vorsprung wird einerseits die Packungsdichte des Schallreduktionsmaterials im Zentralbereich erhöht und wird zudem das Schallreduktionsmaterial in Richtung zur Einlassöffnung hin gegen das Gehäuse gedrückt bzw. vorgespannt.

Der Vorsprung kann bevorzugt gegenüber der wenigstens einen Einlassöffnung angeordnet sein. In diesem Fall ist der Vorsprung bevorzugt in der Art eines Stempels ausgebildet. In einer anderen Ausgestaltung kann der Vorsprung an der Seite der wenigstens einen Einlassöffnung, zum Beispiel die Einlassöffnung(en) umfänglich umschließend angeordnet sein.

Der Vorsprung kann einstückig mit dem Gehäuse ausgebildet sein oder als ein separates Bauteil in das Gehäuse eingesetzt sein.

Es können ein oder mehrere Vorsprünge, die in das Gehäuse hinein ragen, vorgesehen sein.

Vorzugsweise ist eine Querausdehnung (z.B. Durchmesser oder Diagonale) des Vorsprungs mindestens so groß wie eine Querausdehnung (z.B. Durchmesser oder Diagonale) der Einlassöffnung oder der Gesamtheit der Einlassöffnungen. Hierdurch kann erreicht werden, dass das Schallreduktionsmaterial durch den Vorsprung gegen den Rand der Einlassöffnung(en) gedrückt wird und im Ergebnis kein Spalt zwischen Gehäuse und Schallreduktionsmaterial entsteht.

Vorzugsweise kann eine Eindringtiefe des Vorsprungs in das Gehäuse variabel sein. Dies kann beispielsweise durch einen in das Gehäuse einschraubbaren oder über mehrere Raststellungen einschiebbaren Vorsprung realisiert werden.

In einer weiteren Ausgestaltung der Erfindung kann das Schallreduktionsmaterial derart konfiguriert sein, dass es in seinem entspannten Ausgangszustand vor dem Einbau in den Schalldämpfer in einem Bereich, der nach dem Einbau in den Schalldämpfer im Zentralbereich positioniert ist, wenigstens eine konvexe Wölbung aufweist.

In einer noch weiteren Ausgestaltung der Erfindung weist das Gehäuse einen Einlassstutzen auf, der mit der wenigstens Einlassöffnung versehen oder gekoppelt ist. Dieser Einlassstutzen kann vorzugsweise als Anschluss oder Adapter an ein Druckluftventil oder eine Druckluftleitung ausgestaltet sein.

Gegenstand der Erfindung ist auch eine Druckluftaufbereitungsanlage, insbesondere für Kraftfahrzeuge, die wenigstens einen oben beschriebenen Schalldämpfer der Erfindung aufweist.

Dabei kann der Schalldämpfer bevorzugt mit einem Ausgang eines Ventils verbunden sein, welches stromab einer Lufttrocknereinrichtung vorgesehen ist. Bei dem Ventil handelt es sich beispielsweise um ein Regenerationsventil zum Durchführen eines Regenerationsprozesses für die Lufttrocknereinrichtung. Der Schalldämpfer der Erfindung ist aber grundsätzlich in Kombination mit beliebigen Ventilen einer Druckluftaufbereitungsanlage einsetzbar.

Obige sowie weitere Vorteile, Merkmale und Anwendungsmöglichkeiten der Erfindung werden aus der nachfolgenden Beschreibung eines Ausführungsbeispiels anhand der beiliegenden Zeichnungen besser verständlich. Darin zeigen, größtenteils schematisch:
- Fig. 1: ein stark vereinfachtes Schaltungsdiagramm einer Druckluftaufbereitungsanlage, in welcher ein erfindungsgemäß ausgestalteter Schalldämpfer einsetzbar ist;
- Fig. 2: eine Schnittansicht eines Schalldämpfers gemäß einem Ausführungsbeispiel der Erfindung; und
- Fig. 3: eine vereinfachte Schnittansicht eines Schalldämpfers gemäß einem weiteren Ausführungsbeispiel der Erfindung.

**Fig. 1** zeigt stark vereinfacht eine Druckluftaufbereitungsanlage eines Kraftfahrzeugs, insbesondere eines Nutzfahrzeugs, in welcher der Schalldämpfer der Erfindung besonders vorteilhaft einsetzbar ist. Dabei ist der Schalldämpfer der Erfindung insbesondere als Schalldämpfer 30 geeignet, der an das Regenerationsventil 28 oder ein anderes Ventil stromab der Lufttrocknereinrichtung 14 angeschlossen werden kann. Der Schalldämpfer 30 ist ausgangsseitig mit dem Auslass 32 in die Atmosphäre verbunden oder bildet selbst diesen Auslass.

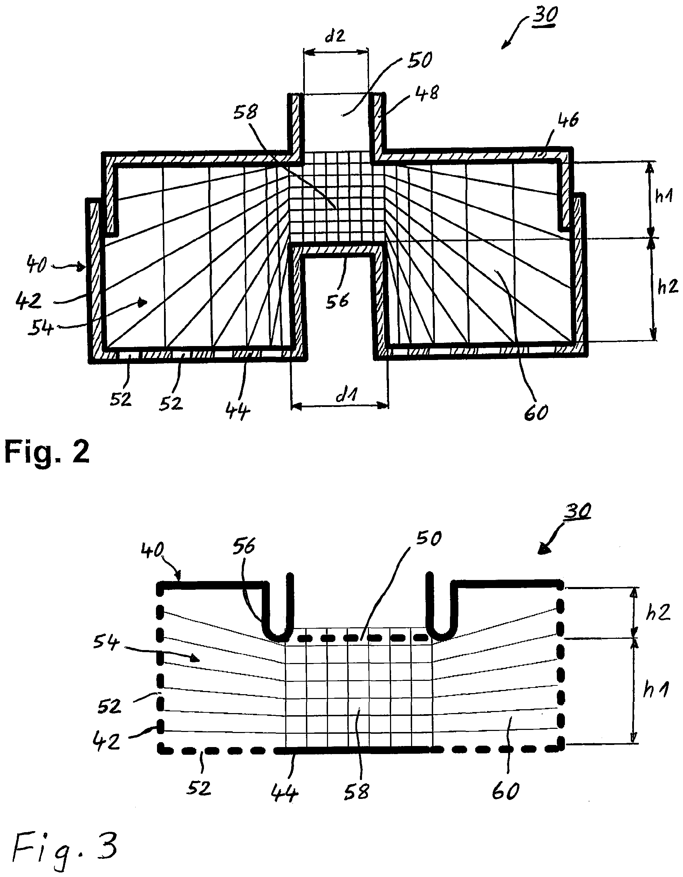

**Fig. 2** zeigt den Aufbau des Schalldämpfers 30 gemäß einem Ausführungsbeispiel der vorliegenden Erfindung in mehr Einzelheiten.

Der Schalldämpfer 30 hat ein topfartiges Gehäuse 40, das einen im Wesentlichen zylindrischen Topfmantel 42, einen Topfboden 44 und einen Deckel 46 aufweist. Der Deckel 46 ist mit dem Topfmantel 42 zum Beispiel verschraubt oder durch einen Rast- oder Schnappverschluss verbunden. Der Deckel 46 ist im Wesentlichen zentral mit einem Einlassstutzen 48 ausgebildet oder verbunden. Dieser Einlassstutzen 48 ist mit einer Einlassöffnung 50 versehen, die einen Durchmesser d2 hat. Der Einlassstutzen 48 ist vorzugsweise ferner als Anschluss oder Adapter zur Verbindung mit dem Regenerationsventil 28 oder einer Druckluftleitung konfiguriert. Das Gehäuse 40 bzw. seine Bauteile 42/44, 46/48 sind beispielsweise als Spritzgussteile aus einem Kunststoffmaterial gefertigt.

Der Topfboden 44 ist gegenüber dem Einlassstutzen 48 bzw. der Einlassöffnung 50 mit einem stempelartigen Vorsprung 56 ausgebildet. Der Vorsprung hat einen Durchmesser d1, der etwas größer bemessen ist als der Durchmesser d2 der Einlassöffnung 50. Der Vorsprung 56 ist im Wesentlichen koaxial zum Einlassstutzen 48 und zur Einlassöffnung 50 angeordnet und ausgestaltet.

In dem Ausführungsbeispiel von Fig. 2 ist der Vorsprung 56 integral mit dem Topfboden 44 geformt. In anderen Ausführungsformen der Erfindung ist der Vorsprung als ein separates Bauteil in den Topfboden 44 des Gehäuses 40 eingesetzt und fest mit diesem verbunden.

Durch diesen in das Gehäuse 40 hinein ragenden Vorsprung 56 wird ein Zentralbereich 58 gebildet, der an den Einlassstutzen 48 bzw. die Einlassöffnung 50 angrenzt und im Wesentlichen zwischen dem Einlassstutzen 48 bzw. der Einlassöffnung 50 und dem Vorsprung 56 definiert ist.

Das Gehäuse 40 besitzt eine Höhe h, die durch den Abstand zwischen Topfboden 44 und Deckel 46 definiert ist. Der Vorsprung 56 besitzt eine Eindringtiefe h2 ins Innere des Gehäuses 40. Somit hat der Zentralbereich 58 zwischen Vorsprung 56 und Einlassöffnung 50 eine entsprechend reduzierte Resthöhe von h1 = h - h2.

Im Bereich außerhalb des Vorsprungs 56 ist der Topfboden 44 mit mehreren Auslassöffnungen 52 versehen. Alternativ oder zusätzlich kann auch der Topfmantel 42 mit Auslassöffnungen 52 versehen sein (vgl. Fig. 3). Der Gehäusebereich, der an diese Auslassöffnungen 52 angrenzt, definiert einen Außenbereich im Sinne der Erfindung. Die Auslassöffnungen 50 sind beispielsweise mit dem Auslass 32 in die Atmosphäre verbunden oder bilden selbst diesen Auslass 32.

Der Vorsprung 56 selbst weist vorzugsweise keine Auslassöffnungen auf. Die durch die Einlassöffnung 50 in axialer Richtung einströmende Druckluft durchströmt so zunächst den Zentralbereich 58 und dann den ringförmigen Außenbereich 60, bevor sie den Schalldämpfer 30 durch die Auslassöffnungen 52 verlässt. Dabei dehnt sich die Druckluft insbesondere im Zentralbereich 58 aus.

Wie in Fig. 2 dargestellt, ist in dem Gehäuse 40 ein Gestrick 54, bevorzugt aus Metall, ein- oder mehrlagig gewickelt, als Schallreduktionsmatial angeordnet. Anstelle des Metallgestricks kann für das adsorptionsschalldämpfende Schallreduktionsmaterial 54 auch ein Gewirk, ein Schaumstoffmaterial oder dergleichen verwendet werden.

Wie in Fig. 2 angedeutet, hat dieses Gestrick 54 im Zentralbereich 58 eine höhere Packungsdichte als im Außenbereich 60. Außerdem ist das Gestrick 54 gegen den Rand der Einlassöffnung 50 vorgespannt, sodass an dieser Stelle kein Spalt zwischen dem Gestrick 54 und dem Deckel 46 des Gehäuses 40 existiert.

In einer Ausführungsform kann das Gestrick 54 mit unterschiedlichen Packungsdichten im Zentralbereich 58 und im Außenbereich 60 hergestellt werden. Der Vorsprung 56 dient dann dem Aufrechterhalten der höheren Packungsdichte im Zentralbereich 58 und dem Vorspannen des Gestricks 54 gegen den Rand der Einlassöffnung 50. In einer anderen Ausführungsform kann das Gestrick 54 mit einer im Wesentlichen einheitlichen Packungsdichte hergestellt werden. In diesem Fall drückt der Vorsprung 56 das Gestrick 54 im Zentralbereich 58 beim Zusammenbau des Schalldämpfers 30 zusammen und gegen die Einlassöffnung 50 und erhöht auf diese Weise die Packungsdichte des Gestricks 54 im Zentralbereich 58. Das Gestrick 54 ragt in diesem Fall gegebenenfalls etwas in die Einlassöffnung 50 des Einlassstutzens 48 hinein. Beide vorgenannten Varianten können auch miteinander kombiniert werden.

In einer weiteren Ausführungsform kann das Gestrick 54 derart konfiguriert sein, dass es in seinem entspannten Ausgangszustand vor dem Einbau in den Schalldämpfer 30 in einem Bereich, der nach dem Einbau in den Schalldämpfer 30 im Zentralbereich 58 positioniert ist, wenigstens eine konvexe Wölbung aufweist. Das im Zentralbereich im Wesentlichen ebene Gehäuse 40 drückt dann die konvexe Wölbung des Gestricks 54 nach innen und erhöht so die Packungsdichte des Gestricks 54 im Zentralbereich.

Die durch die Einlassöffnung 50 einströmende Druckluft gelangt zunächst in den Zentralbereich 58 und dehnt sich in diesem aus. Durch die erhöhte Packungsdichte des Gestricks 54 in diesem Zentralbereich 58 können die dabei entstehenden Strömungsgeräusche effektiv gedämpft werden. Anschließend durchströmt die (teil-)entspannte Druckluft den Außenbereich 60, in dem der Schall weiter absorbiert wird, bevor die Druckluft den Schalldämpfer 30 durch die Auslassöffnungen 52 verlässt. Da die Packungsdichte des Gestricks 54 im Außenbereich 60 nicht erhöht ist, wird der Strömungswiderstand für die Druckluft gering gehalten und können weiterhin kurze Entlüftungszeiten gewährleistet werden.

Im Ausführungsbeispiel von Fig. 2 hat der Vorsprung 56 eine vorgegebene Eindringtiefe h2 in das Gehäuse 40. In anderen Ausführungsformen der Erfindung kann diese Eindringtiefe h2 auch variabel einstellbar sein. Dies kann zum Beispiel durch einen in den Topfboden 44 einschraubbaren oder mit mehreren Rastpositionen einschiebbaren Vorsprung 56 realisiert werden. Durch eine variable Eindringtiefe h2 des Vorsprungs 56 kann im Ergebnis auch die Packungsdichte des Gestricks 54 im Zentralbereich 58 variabel eingestellt werden. Durch diese Maßnahme besteht die Möglichkeit, das Gestrick 54 und damit den gesamten Schalldämpfer 24 an verschiedene Rahmenbedingungen (z.B. Druckverhältnisse, Entlüftungszeiten, etc.) anzupassen.

Im Ausführungsbeispiel von Fig. 2 wird das Gestrick 54 im Zentralbereich 58 in axialer Richtung (Oben/Unten-Richtung in Fig. 2) verpresst, um die höhere Packungsdichte zu bewirken. Alternativ oder zusätzlich ist es auch möglich, die Packungsdichte des Gestricks 54 im Zentralbereich 58 durch ein Verpressen in radialer Richtung (Links/Rechts-Richtung in Fig. 2) zu erhöhen.

**Fig. 3** zeigt den Aufbau eines Schalldämpfers 30 gemäß einem weiteren Ausführungsbeispiel der vorliegenden Erfindung. Gleiche oder entsprechende Komponenten sind mit den gleichen Bezugszeichen wie in dem Ausführungsbeispiel von Fig. 2 gekennzeichnet.

Der in Fig. 3 gezeigte Schalldämpfer 30 unterscheidet sich von dem Schalldämpfer 30 durch die technische Maßnahme zum Erhöhen der Packungsdichte des Schallreduktionsmaterials 54 im Zentralbereich 58 des Gehäuses 40. In diesem Ausführungsbeispiel ist ein ringförmiger Vorsprung 56 umlaufend um die mehreren Einlassöffnungen 50 herum am Gehäusedeckel 46 ausgebildet. Die Höhe h1 des Zentralbereichs 58 des Gehäuses wird so ebenfalls gegenüber einer Gesamthöhe h des Gehäuses 40 entsprechend reduziert.

Ferner sind im Vergleich zum Ausführungsbeispiel von Fig. 2 mehrere Einlassöffnungen 50 im Gehäusedeckel 46 ausgebildet, mit denen ein Einlassstutzen 48 gekoppelt sein kann. Außerdem sind im Vergleich zum Ausführungsbeispiel von Fig. 2 auch im Topfmantel 42 des Gehäuses 40 mehrere Auslassöffnungen 50 vorgesehen, durch welche die (teil-)entspannte Druckluft radial ausströmen kann.

Im Übrigen entsprechen Aufbau und Funktionsweise des in Fig. 3 dargestellten Schalldämpfers 30 sowie deren mögliche Modifikationen jenen des oben beschriebenen Schalldämpfers von Fig. 2.

### BEZUGSZEICHENLISTE

- 10: Kompressor
- 12: Eingangsleitung
- 14: Lufttrocknereinrichtung
- 16: Hauptleitung
- 18: Rückschlagventil
- 20: Druckluftanschlüsse
- 22: Ablassventil
- 24: Schalldämpfer
- 26: Auslass in die Atmosphäre
- 28: Regenerationsventil
- 30: Schalldämpfer
- 32: Auslass in die Atmosphäre
- 34: Steuereinrichtung
- 40: Gehäuse
- 42: Topfmantel
- 44: Topfboden
- 46: Deckel
- 48: Einlassstutzen
- 50: Einlassöffnung(en)
- 52: Auslassöffnungen
- 54: Schallreduktionsmaterial, z.B. Gestrick
- 56: (in das Gehäuse hinein ragender) Vorsprung
- 58: Zentralbereich
- 60: Außenbereich

- d1: Querausdehnung, Durchmesser des Vorsprungs 56
- d2: Querausdehnung, Durchmesser der Einlassöffnung 50
- h: Höhe des Gehäuses 40
- h1: Höhe des Zentralbereichs 58
- h2: Eindringtiefe des Vorsprungs 56

## Patentansprüche

1. Schalldämpfer (24, 30), insbesondere zum Ableiten von Druckluft aus einer Druckluftaufbereitungsanlage eines Kraftfahrzeugs, aufweisend:
ein Gehäuse (40) mit wenigstens einer Einlassöffnung (50) und wenigstens einer Auslassöffnung (52); und
ein in dem Gehäuse (40) zwischen der wenigstens einen Einlassöffnung (50) und der wenigstens einen Auslassöffnung (52) angeordnetes Schallreduktionsmaterial (54) zum Reduzieren von Strömungsgeräuschen einer in dem Gehäuse (40) expandierenden und durch das Schallreduktionsmaterial (54) hindurch strömenden Druckluft,
**dadurch gekennzeichnet, dass**
das Schallreduktionsmaterial (54) in einem an die wenigstens eine Einlassöffnung (50) angrenzenden Zentralbereich (58) eine höhere Packungsdichte aufweist als in einem an die wenigstens eine Auslassöffnung (52) angrenzenden Außenbereich (60).

2. Schalldämpfer nach Anspruch 1, bei welchem das Schallreduktionsmaterial (54) im Zentralbereich (58) in Richtung zu der wenigstens einen Einlassöffnung (50) hin gegen das Gehäuse (40) vorgespannt ist.

3. Schalldämpfer nach Anspruch 1 oder 2, welcher eine axiale Richtung, die durch eine Einströmrichtung der Druckluft durch die wenigstens eine Einlassöffnung (50) definiert ist, und eine radiale Richtung senkrecht zu dieser axialen Richtung aufweist und bei welchem das Schallreduktionsmaterial (54) in der axialen Richtung und/oder der radialen Richtung verdichtet oder verpresst ist.

4. Schalldämpfer nach Anspruch 1 oder 2, bei welchem das Gehäuse (40) gegenüber der wenigstens einen Einlassöffnung (50) keine Auslassöffnung (52) aufweist.

5. Schalldämpfer nach einem der vorhergehenden Ansprüche, bei welchem eine Packungsdichte des Schallreduktionsmaterials (54) im Zentralbereich (58) variabel einstellbar ist.

6. Schalldämpfer nach einem der vorhergehenden Ansprüche, bei welchem das Gehäuse (40) einen in das Gehäuse hinein ragenden Vorsprung (56) aufweist, der derart positioniert ist, dass eine Höhe (h1) des Zentralbereichs (58) kleiner als eine Höhe (h) des Gehäuses (40) ist.

7. Schalldämpfer nach Anspruch 6, bei welchem eine Querausdehnung (d1) des Vorsprungs (56) wenigstens so groß wie eine Querausdehnung (d2) der Einlassöffnung (50) oder der Gesamtheit der Einlassöffnungen (50) ist.

8. Schalldämpfer nach Anspruch 6 oder 7, bei welchem eine Eindringtiefe (h2) des Vorsprungs (56) in das Gehäuse (40) variabel ist.

9. Schalldämpfer nach einem der vorhergehenden Ansprüche, bei welchem das Schallreduktionsmaterial (54) derart konfiguriert ist, dass es in seinem entspannten Ausgangszustand vor dem Einbau in den Schalldämpfer (24, 30) in einem Bereich, der nach dem Einbau in den Schalldämpfer (24, 30) im Zentralbereich (58) positioniert ist, wenigstens eine konvexe Wölbung aufweist.

10. Schalldämpfer nach einem der vorhergehenden Ansprüche, bei welchem das Gehäuse (40) einen Einlassstutzen (48) aufweist, der mit der wenigstens einen Einlassöffnung (50) versehen oder gekoppelt ist.

11. Druckluftaufbereitungsanlage, insbesondere für Kraftfahrzeuge, aufweisend wenigstens einen Schalldämpfer (24, 30) nach einem der vorhergehenden Ansprüche.

12. Druckluftaufbereitungsanlage nach Anspruch 11, bei welcher der Schalldämpfer (30) mit einem Ausgang eines Ventils (28) verbunden ist, welches stromab einer Lufttrocknereinrichtung (14) vorgesehen ist.

## Claims

1. Sound suppressor (24, 30), in particular for discharging compressed air from a compressed air treatment system of a motor vehicle, having:
a housing (40) with at least one inlet opening (50) and at least one outlet opening (52); and
a sound reduction material (54) arranged in the housing (40) between the at least one inlet opening (50) and the at least one outlet opening (52), for reducing flow noises of compressed air which expands in the housing (40) and flows through the sound reduction material (54),
**characterised in that**
the sound reduction material (54) has a higher packing density in a central region (58) adjacent to the at least one inlet opening (50) than in an outer region (60) adjacent to the at least one outlet opening (52).

2. Sound suppressor according to Claim 1 in which, in the central region (58), the sound reduction material (54) is prestressed against the housing (40) in the direction of the at least one inlet opening (50).

3. Sound suppressor according to Claims 1 or 2, with an axial direction defined by an inflow direction of the compressed air through the at least one inlet opening (50), and a radial direction perpendicular to said axial direction, and in which the sound reduction material (54) is compacted or compressed in the axial direction and/or in the radial direction.

4. Sound suppressor according to Claims 1 or 2, in which the housing (40) has no outlet opening (52) opposite the at least one inlet opening (50).

5. Sound suppressor according to any of the preceding claims, in which the packing density of the sound reduction material (54) is adjustable in a variable manner in the central region (58).

6. Sound suppressor according to any of the preceding claims, in which the housing (40) has a projection (56) that projects inwards into the housing and is positioned in such manner that a height (h1) of the central region (58) is smaller than a height (h) of the housing (40).

7. Sound suppressor according to Claim 6, in which a transverse dimension (d1) of the projection (56) is at least as large as a transverse dimension (d2) of the inlet opening (50), or of the entire inlet openings (50).

8. Sound suppressor according to Claims 6 or 7, in which a penetration depth (h2) of the projection (56) into the housing (40) is variable.

9. Sound suppressor according to any of the preceding claims, in which the sound reduction material (54) is configured in such that it has at least one convex curvature in its expanded initial state before being fitted into the sound suppressor (24, 30), in a region which, after fitting into the sound suppressor (24, 30), is located in the central region (58).

10. Sound suppressor according to any of the preceding claims, in which the housing (40) has an inlet connection piece (48) which is provided with or coupled to the at least one inlet opening (50).

11. Compressed air treatment system, in particular for motor vehicles, having at least one sound suppressor (24, 30) according to any of the preceding claims.

12. Compressed air treatment system according to Claim 11, in which the sound suppressor (30) is connected to an output of a valve (28) positioned downstream from an air-dryer device (14).

## Revendications

1. Silencieux (24, 30), notamment pour évacuer de l'air comprimé d'une installation de préparation d'air comprimé d'un véhicule automobile, comportant :
une enveloppe (40), ayant au moins une ouverture (50) d'entrée et au moins une ouverture (52) de sortie et
un matériau (54) de réduction du bruit, monté entre la au moins une ouverture (50) d'entrée et la au moins une ouverture (52) de sortie, pour réduire des bruits d'écoulement d'air comprimé se détendant dans l'enveloppe (40) et passant à travers le matériau (54) de réduction du bruit,
**caractérisé en ce que**
le matériau (54) de réduction du bruit a, dans une partie (58) centrale voisine de la au moins une ouverture (50) d'entrée, une densité de bourrage plus grande que dans une partie (60) extérieure voisine de la au moins une ouverture (52) de sortie.

2. Silencieux suivant la revendication 1, dans lequel le matériau (54) de réduction du bruit, dans la partie (58) centrale, est précontraint contre l'enveloppe (40) en direction de la au moins une ouverture (50) d'entrée.

3. Silencieux suivant la revendication 1 ou 2, qui a une direction axiale définie par un sens d'entrée de l'air comprimé dans la au moins une ouverture (50) d'entrée et une direction radiale perpendiculaire à cette direction axiale et dans lequel le matériau (54) de réduction du bruit est comprimé ou pressé dans la direction axiale et/ou dans la direction radiale.

4. Silencieux suivant la revendication 1 ou 2, dans lequel l'enveloppe (40) n'a pas d'ouverture (52) de sortie en face de la au moins une ouverture (50) d'entrée.

5. Silencieux suivant l'une des revendications précédentes, dans lequel une densité de bourrage du matériau (54) de réduction du bruit est réglable, de manière variable dans la partie (58) centrale.

6. Silencieux suivant l'une des revendications précédentes, dans lequel l'enveloppe (40) a une saillie (56) faisant saillie vers l'intérieur de l'enveloppe et placée de manière à ce qu'une hauteur (h1) de la partie (58) centrale soit plus petite qu'une hauteur (h) de l'enveloppe (40).

7. Silencieux suivant la revendication 6, dans lequel une étendue (d1) transversale de la saillie (56) est au moins aussi grande qu'une étendue (d2) transversale de l'ouverture (50) d'entrée ou que de l'ensemble des ouvertures (50) d'entrée.

8. Silencieux suivant la revendication 6 ou 7, dans lequel une profondeur (h2) de pénétration de la saillie (56) dans l'enveloppe (40) est variable.

9. Silencieux suivant l'une des revendications précédentes, dans lequel le matériau (54) de réduction du bruit est configuré de manière à avoir, dans son état de départ détendu, avant l'introduction dans le silencieux (24, 30), dans une partie, qui est placée après l'introduction d'un silencieux (24, 30) dans la partie (58) centrale, au moins une courbure convexe.

10. Silencieux suivant l'une des revendications précédentes, dans lequel l'enveloppe (40) a une tubulure (48) d'entrée, qui est pourvue de la au moins une ouverture (50) d'entrée ou qui lui est adjointe.

11. Installation de préparation d'air comprimé, notamment pour des véhicules automobiles, comprenant au moins un silencieux (24, 30) suivant l'une des revendications précédentes.

12. Installation de préparation d'air comprimé suivant la revendication 11, dans laquelle le silencieux (30) est relié à une sortie d'une soupape (28) prévue en aval d'un dispositif (14) de séchage d'air.
